# EUROPEAN PATENT APPLICATION

(11) **EP 1 113 290 A2**
(43) Date of publication of application: **04.07.2001**
(21) Application number: 00309254.1
(22) Date of filing: 20.10.2000
(51) Int. Cl.: G01T 1/00

(54) **Radiation imager having light absorbing layer**

(30) Priority: 27.12.1999 US 472929
(71) Applicant: GENERAL ELECTRIC COMPANY, Schenectady, NY 12345 (US)
(72) Inventor: Albagli, Douglas, Clifton Park, New York 12065 (US); Giambattista, Brian William, San José, California 95120 (US); Kwasnick, Robert Forrest, Palo Alto, California 94303 (US)
(74) Representative: Pedder, James Cuthbert

(57) **Abstract**

A radiation imager (100) includes a light absorbing layer (150) disposed substantially over a plurality of light sensitive imaging regions (130) and/or a plurality of switching devices (140) of a light sensitive imaging array (120). The light absorbing layer (150) reduces the amount of light incident on the light sensitive imaging regions (130) from a scintillator (180) thereby allowing use of higher energy radiation for inspection of parts while avoiding saturation of the light sensitive imaging array (120). The light absorbing layer (150) also reduces the amount of light incident on the switching devices (140) thereby reducing leakage between the switching devices (140) during read out. Where the scintillator (180) ages over time, e.g., a cesium iodide scintillator which preferentially increasingly absorbs blue light, desirably the light absorbing layer (150) primarily absorbs the blue light from the scintillator (180) so that the calibration of the radiation imager (100) does not change over time. Desirably the light absorbing layer (150) is a light absorbing barrier layer having p-type doped amorphous silicon.

## Description

This invention relates generally to digital imaging, and more particularly, to digital imaging via the conversion of radiation such as x-ray radiation into visible light impinging on a light sensitive imaging array.

Radiation imagers such as digital x-ray imagers typically include a scintillator coupled to a light sensitive imaging array. X-ray radiation absorbed in the scintillator generates optical photons which in turn pass into the light sensitive imaging array.

The light sensitive imaging array typically includes an array of pixels. Each pixel comprises a light imaging region or photosensor element such as a photodiode, a switching device such as a transistor, and portions of row and column address lines. Both the photosensor and the switching device may be amorphous-silicon based devices, in which case the switching device is a thin film transistor (TFT), typically with an inverted-staggered configuration.

In operation, the row (scan) address lines are switched on in turn, so the signal accumulated on the photodiode is read out through the TFT onto the column (data) address lines. Connection of external electronics to the address lines is typically made at contact pads in a region outside the perimeter of the light sensitive imaging array.

A scintillator typically emits one hundred to more than one thousand photons per absorbed x-ray. In industrial x-ray inspection of parts using x-ray radiation having an energy of about 100 keV or greater, the generation of photons in the scintillator is high which causes the photodiodes in the light sensitive imaging array to quickly saturate with charge. This requires either reducing the output of the x-ray tube or taking frequent readouts of the photodiodes to avoid saturation of the photodiodes. In both cases the time required for inspection of a part increases. In addition, the time for inspection also increases where the inspection of the part is made from multiple angles, e.g., where the part is rotated, for three-dimensional reconstruction of an image.

Also, at high signal levels, and particularly where multiple images of an object are made, imager performance can be degraded because light from the scintillator is also incident on the switching devices. This can cause leakage in the TFTs, so the signal from one TFT is unintentionally read out during the addressing of another TFT.

In addition, in certain scintillators such as cesium iodide (CsI) scintillators, the output changes over time due to x-ray radiation exposure. For example, the output of such a scintillator decreases over time at the high energy end of its emission spectrum (e.g., blue light) due to the formation of color centers which absorb light preferentially in the blue part of the visible spectrum. See "Radiation Damage of CsI(T1) Crystals Above 10³ RAD," M. Kobayashi et al., Nucl. Instr. And Method. In Phys. Res., Vol. A254, pp. 275-280 (1987). This change in output or aging of the scintillator over time causes the radiation detector to no longer remain calibrated thereby affecting image quality particularly where multiple views of a part are taken to three-dimensionally reconstruct an image.

Therefore, there is a need for a light absorbing layer which may be disposed between a scintillator and a light sensitive imaging array to reduce the rate at which the light sensitive imaging array saturates, to reduce light incident on the switching devices, and/or to compensate for the aging of a scintillator. The above need is satisfied by the present invention which in one aspect provides a radiation imager having a light sensitive imaging array with a plurality of light sensitive imaging regions and a plurality of switching devices, and a light absorbing layer disposed substantially over at least one of the plurality of light sensitive imaging regions and the plurality of switching devices.

In another aspect, a method is provided for fabricating a radiation imager in which the method includes providing a light sensitive imaging array having a plurality of light sensitive imaging regions and a plurality of switching devices, and forming a light absorbing layer, e.g., as noted above, disposed substantially over at least one of, and desirably both, the plurality of light sensitive imaging regions and the plurality of switching devices.

The invention will now be described in greater detail, by way of example, with reference to the drawings, in which:-
FIG. 1 is a cross-sectional view of a portion of an exemplary radiation imager in one embodiment of the present invention;
FIG. 2 is a graph of the light emission spectrum of a scintillator during initial exposure to radiation (illustrated as a solid line) and after prolonged exposure to radiation (illustrated as a dashed line); and
FIG. 3 is a graph of the light transmission spectrum for the light absorbing layer of FIG. 1.

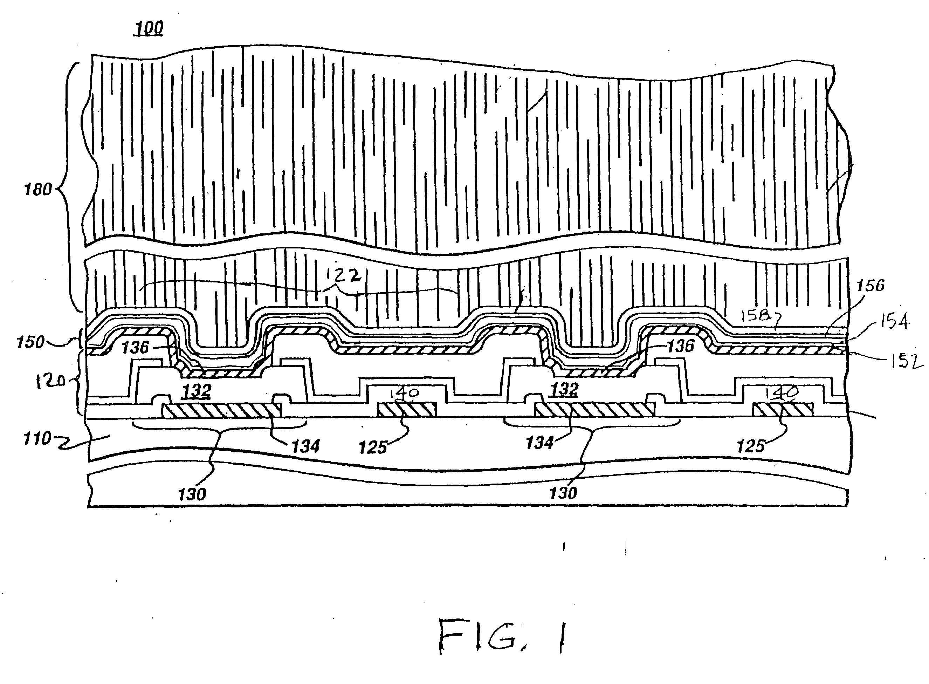

FIG. 1 is a cross-sectional view of a portion of an exemplary radiation imager 100. Radiation imager 100 includes a substrate 110 on which a light sensitive imaging array 120 is disposed, a scintillator 180 optically coupled to light sensitive imaging array 120, and a light absorbing layer 150 disposed between light sensitive imaging array 120 and scintillator 180. In this exemplary radiation imager, light absorbing layer 150 is incorporated as part of a barrier layer between scintillator 180 and light sensitive imaging array 120.

Light sensitive imaging array 120 includes a plurality of pixels 122 (a representative one of which is illustrated in FIG. 1) which are typically arranged in rows and columns on substrate 110. Each pixel 122 includes a photosensitive element or light sensitive imaging region 130 and a switching device 140. For example, each light sensitive imaging region 130 includes a photodiode 132 disposed over a bottom contact pad 134 and below a upper transparent conductive layer 136. Upper conductive layer 136 may include a material such as indium tin oxide or the like. Each switching device 140 includes a thin film transistor (TFT) which couples light sensitive imaging region 130 to readout electronics via data line 125.

Photodiode 132 comprises light absorptive semiconductive material such as substantially intrinsic hydrogenated amorphous silicon (a-Si), and may comprise layers (not shown) of silicon doped to a selected conductivity (i.e., n-type or p-type) to provide the desired respective electrical contact to bottom contact pad 134 and upper conductive layer 136. A suitable switching device 140 is described in U.S. Patent No. 5,517,031.

Scintillator 180 emits optical photons or visible light in response to the absorption of incident radiation. A portion of the emitted visible light is absorbed in light absorbing layer 150 (as explained below) and a portion of the emitted visible light penetrates light absorbing layer 150 impinging on light sensitive imaging array 120. The impingement of the emitted light results in voltage levels that are periodically read and converted to digital data.

Suitable scintillators comprise a scintillating material selected to have a high absorption cross-section for radiation of the type it is desired to detect with radiation imager 100. For radiation imagers designed for the detection of x-rays, the scintillating material is typically cesium iodide doped with thallium (CsI:T1), or alternatively, sodium (CsI:Na). The cesium iodide is advantageously deposited on light absorbing layer 150 by evaporation in the form of needles. Each needle has a relatively long longitudinal axis compared to a relatively short diameter so that most optical photons emerge from the bottom of the scintillator towards the light sensitive imaging array. The scintillator may have a thickness on the order of about 0.1 mm to about 1.0 mm and the doping level is on the order of 0.1% to 10% by weight. Alternatively, the scintillating material may be formed into a fiber optic scintillator. Suitable materials include terbium-activated silicate luminescent glasses.

Light absorbing layer 150 typically is configured to extend substantially over at least one of the plurality of light imaging regions 130 and the plurality of switching devices 140 for reducing the amount of light incident on light sensitive imaging regions 130 and switching devices 140 from scintillator 180. Desirably, light absorbing layer 150 is continuous with respect to scintillator 180, e.g., a continuous layer under scintillator 180, for reducing the amount of light incident on both light sensitive imaging regions 130 as well as switching devices 140. In addition, as explained in greater detail below, light absorbing layer 150 is operable to primarily absorb a portion of the spectrum of the light from scintillator 180.

In this exemplary radiation imager 100, light absorbing layer 150 is incorporated as part of the barrier layer of the radiation imager. For example, light absorbing layer 150 is configured to serve the purposes of sealing the light sensitive imaging array 120 from moisture which could degrade performance, acting as a controlled surface to which scintillator 180 adheres, acting as an optical coupling medium, and reducing the amount of light incident on light sensitive imaging array 120 per absorbed radiation in scintillator 180.

Light absorbing layer 150 includes a first or bottom layer 152 which provides a buffer layer, e.g., a uniform layer on the indium tin oxide, for attachment to the subsequent layers; a second or top layer 158 which provides a moisture barrier and an adhesion bonding surface for attachment to scintillator 180; and a third absorbing layer 156 comprising a light absorbing material disposed between bottom layer 152 and top layer 158. Optionally, a fourth layer 154, which also provides a moisture barrier, may be disposed between absorbing layer 156 and bottom layer 152.

In this exemplary light absorbing layer 150, top layer 158 and fourth layer 154 include layers of silicon nitride, bottom layer 152 includes a layer of silicon oxide, and absorbing layer 156 includes a layer of p-type doped amorphous silicon such as p+ amorphous silicon.

With the substrate, light sensitive imaging array, and contact pads initially provided, fabrication of exemplary light absorbing layer 150 is as follows. Light absorbing layer 150 may be deposited by plasma-enhanced chemical vapor deposition (PECVD) as a sequence of layers in a single deposition process step. Typically, the deposition temperature is about 250 degrees Celsius or less.

For example, bottom layer 152 comprises silicon oxide (SiOx) and may be deposited using source gasses comprising silane and nitrous oxide. Fourth layer 154 is deposited next and comprises preferably silicon nitride (SiNx), and may be deposited using source gasses comprising silane and ammonia. Absorbing layer 156 is preferably p-type doped amorphous silicon, and may be deposited using source gasses comprising silane, and diborane or trimethylboron as the p-type dopant. Top layer 158 comprises SiNx, and may be deposited using source gasses comprising silane and ammonia.

In addition, bottom layer 152 includes a layer of silicon oxide having a thickness of, for example, about 20 nm to about 500 nm, and preferably about 30 nm. Fourth layer 154 includes a layer of silicon nitride having a thickness of about 0 nm to about 1000 nm, and preferably about 400 nm. Absorbing layer 156 includes a layer of p-type doped amorphous silicon having a thickness of about 30 nm to about 500 nm, and preferably about 100 nm. Top layer 158 includes a layer of silicon nitride having a thickness of about 0 nm to about 1,000 nm, and preferably about 250 nm.

Light absorbing layer 150 is photolithographically patterned to allow electrical contact to the contact pads (not shown) which are beyond the perimeter of the light sensitive imaging array. Light absorbing layer 150 is desirably patterned to be continuous over the light sensitive imaging regions 130 as well as switching devices 140. As is well known in the art, patterning comprises coating the imager with photoresist, exposing the photoresist with actinic radiation with a specific areal pattern, developing and removing the exposed photoresist, etching light absorbing layer 150, and removing the remaining photoresist. Etching of the light absorbing layer may be performed by reactive ion etching using gasses comprising fluorine and chlorine. For example, top layer 158 of SiNx may be etched down to absorbing layer 156 with a gas mixture comprising CF₄. Absorbing layer 156 of p-type doped amorphous silicon may be etched with a gas mixture comprising HCl and SF₆. Fourth layer 154 of SiNx and bottom layer 152 of SiOx may be etched with a gas mixture comprising CF₄. Alternatively, wet etching may be employed, for example HF-based etchants may be used to etch SiNx and SiOx.

From the present description, it will be appreciated by those skilled in the art that the while light absorbing layer 150 includes at least one absorbing layer, the order and number of the layers comprising light absorbing layer 150 may be varied. Desirably, depending on the application, the absorbing layer provides a reduction of light from the scintillator of about 10 percent to about 95 percent, and preferably about 40 percent to about 95 percent.

An alternative light absorbing layer may include a light absorbing barrier layer having mainly silicon SiNx, for example, with the p-type doped amorphous silicon light absorbing layer being sandwiched between two SiNx layers, i.e., not having a silicon oxide layer. Depositing the p-type doped amorphous silicon light absorbing layer between the SiNx layer avoids affecting adhesion to the light sensitive imaging array. Since the SiNx layer may be patterned using reactive ion etching with the endpoint based on an N emission line, depositing the p-type doped amorphous layer between the SiNx layers avoids effecting the endpoint. Also, by depositing the p-type doped amorphous layer between the SiNx layers, the p-type doped amorphous layer does not affect the adhesion of the scintillator to the barrier layer.

Other suitable light absorbing layers may comprise materials such as n-type doped amorphous silicon having a thickness of about 30 nm to about 500 nm and preferably about 150 nm; substantially intrinsic silicon having a thickness of about 50 nm to about 1,000 nm and preferably about 200 nm; silicon-rich silicon nitride having a thickness of about 50 nm to about 1,000 nm and preferably about 500 nm; a metal such as molybdenum or chromium having a thickness of about 10 nm to about 100 nm and preferably about 20 nm, and combinations thereof. For an absorbing layer of molybdenum or chromium, reactive ion etching with gasses comprising SF₆ and Cl₂, and Cl₂, respectively, or wet etchants including phosphoric and nitric acids, or HCl, respectively, may be used.

Scintillator 180 is subsequently disposed adjacent to top layer 158. For example, scintillator 180 may comprise CsI doped with thallium or sodium deposited by thermal evaporation. Alternatively, it may comprise a fiber optic scintillator plate or other body of material. In order to protect the scintillator 180 and underlying light sensitive imaging regions 130 from moisture and ambient light, the scintillator 180 may be sealed with an opaque cover (not shown). The completed radiation imager 100 is then connected to external electrical circuitry (not shown).

In medical imaging with x-ray radiation having energies of about 20 keV to about 140 keV, use of radiation imager 100 allows the x-ray dose to be increased to improve performance, rather than having to reduce the dose to avoid saturation of the light imaging array (e.g., photodiodes) which necessitate multiple reads.

In industrial imaging with x-ray radiation energies of about 100 keV to about 500 keV or greater such as CT applications employing multiple views, use of radiation imager 100 allows the inspection speed to be reduced because the reduction in light per x-ray maintains the time between readout frames. Also, by providing light absorbing layer 150 which absorbs light from scintillator 180, the x-ray dose can be increased which improves the signal-to-noise ratio.

In addition to reducing the flux of light from the scintillator to the light sensitive imaging array by providing a light absorbing layer over the light sensitive imaging regions, over the switching devices, and over address lines and other non-photodiode regions, the amount of scattering of optical photons is also reduced. Scattering of the optical photons presents problems of increased cross-talk and noise in the array and reduces the spacial resolution (modulation transfer function) of the array. Thus, a continuous light absorbing layer reduces scattering of optical photons and reduces noise to improve the modulation transfer function of the radiation imager.

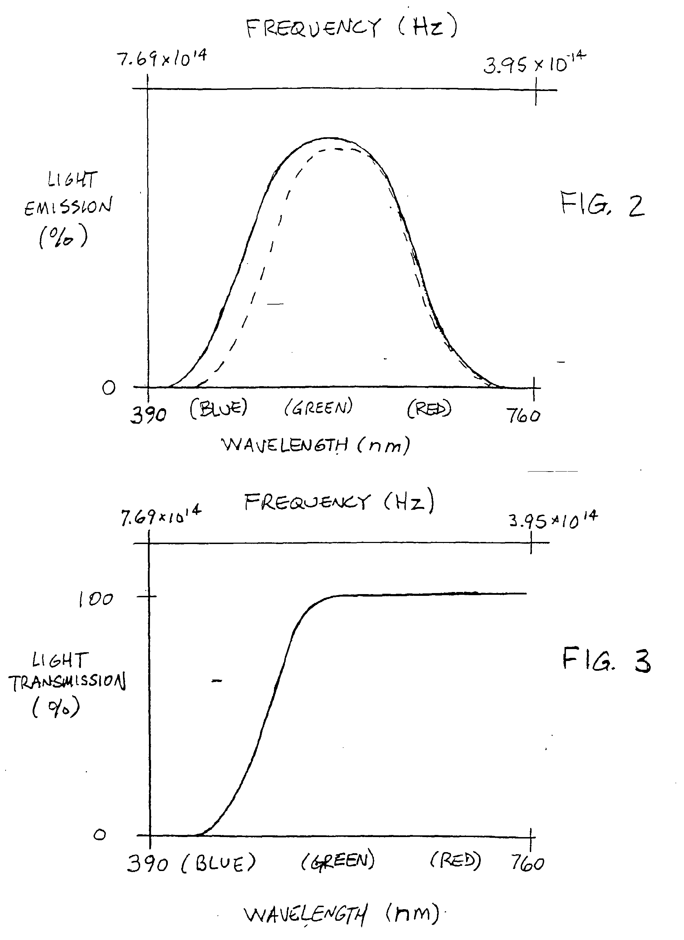

As explained above, a scintillator such as a cesium iodide scintillator ages over time due to radiation exposure. FIG. 2 is a graph illustrating the spectral emission of light from a cesium iodide scintillator verses wavelength or frequency. Initially, x-ray radiation exposure results in the scintillator having a light emission spectrum as illustrated by the solid line in FIG. 2. After a period of time of x-ray radiation exposure, the higher energy light (e.g., blue light, i.e., having a wavelength between about 300 nm to about 600 nm) decreases over time so that the scintillator has a light emission spectrum corresponding to the dashed line shown in FIG. 2. This aging of the scintillator affects the calibration of the radiation imager, and thus the images obtained by the radiation imager.

In another aspect of the invention, the light absorbing layer 150 desirably predominantly or preferentially absorbs the portion of the spectrum of the light, e.g., light having a wavelength less than about 600 nm, emitted by the scintillator which changes over time thereby reducing the aging effect of the scintillator.

As shown in FIG. 3, p-type doped amorphous silicon desirably exhibits absorption of high energy light (e.g., blue light) which corresponds to the spectral region where the CsI scintillator output changes most with x-ray exposure over time. With a p-type doped amorphous silicon layer, this blue light is preferentially absorbed relative to red thereby reducing the aging effect of the scintillator. For example, by absorbing the blue light, the blue light does not factor into the initial calibration of the radiation imager so that the reduction over time of blue light from the scintillator does not affect the calibration of the radiation imager.

For the sake of good order, various aspects of the invention are set out in the following clauses:-
1. A radiation imager comprising:
   a light sensitive imaging array (120) having a plurality of light sensitive imaging regions (130) and a plurality of switching devices (140);
   a light absorbing layer (150) disposed substantially over at least one of said plurality of light sensitive imaging regions (130) and said plurality of switching devices (140); and
   wherein said light absorbing layer (150) reduces the amount of light incident on said at least one of said plurality of light sensitive imaging regions (130) and said plurality of switching devices (140) from a scintillator (180) disposable over said light absorbing imaging array (120).
2. The radiation imager of clause 1 wherein said light absorbing layer (150) is disposed substantially over said plurality of light sensitive imaging regions (130).
3. The radiation imager of clause 1 wherein said light absorbing layer (150) is disposed substantially over said plurality of switching devices (140).
4. The radiation imager of clause 1 wherein said light absorbing layer (150) comprises a continuous light absorbing layer extending over said plurality of layer sensitive imaging regions and said plurality of switching devices.
5. The radiation imager of clause 1 wherein said light absorbing layer (150) primarily absorbs a portion of the spectrum of the light from the scintillator (180).
6. The radiation imager of clause 5 wherein said light absorbing layer (150) primarily absorbs light having a wavelength less than about 600 nm.
7. The radiation imager of clause 5 wherein said light absorbing layer (150) comprises p-type doped amorphous silicon.
8. The radiation imager of clause 1 wherein said light absorbing layer (150) comprises a material selected from the group consisting of p-type doped amorphous silicon, n-type doped amorphous silicon, substantially intrinsic silicon, silicon-rich silicon nitride, metal, and combinations thereof.
9. The radiation imager of clause 1 wherein said light absorbing layer (150) comprises a first layer (152) of silicon oxide, a second layer (158) of silicon nitride, and a p-type doped amorphous silicon layer (156) disposed between said first layer (152) of silicon oxide and said second layer (158) of silicon nitride.
10. A radiation imager comprising:
   a light sensitive imaging array (120) having a plurality of light sensitive imaging regions (130) and a plurality of switching devices (140);
   a scintillator (180);
   a light absorbing layer (150) disposed between said scintillator (180) and said light sensitive imaging array (120) and substantially over at least one of said plurality of light sensitive imaging regions (130) and said plurality of switching devices (140); and
   wherein said light absorbing layer (150) reduces the amount of light incident on said at least one of said plurality of light sensitive imaging regions (130) and said plurality of switching devices (140) from said scintillator (180).
11. The radiation imager of clause 10 wherein said light absorbing layer (150) is disposed substantially over said plurality of light sensitive imaging regions (130).
12. The radiation imager of clause 10 wherein said light absorbing layer (150) is disposed substantially over said plurality of switching devices (140).
13. The radiation imager of clause 10 wherein said light absorbing layer (150) comprises a continuous light absorbing layer extending over said plurality of layer sensitive imaging regions and said plurality of switching devices.
14. The radiation imager of clause 10 wherein a first portion of the light emission from spectrum said scintillator (180) decreases over time, and wherein said light absorbing layer (150) primarily absorbs the first portion of the spectrum of the light emitted from said scintillator (180).
15. The radiation imager of clause 14 wherein said light absorbing layer (150) primarily absorbs light having a wavelength less than about 600 nm.
16. The radiation imager of clause 14 wherein said light absorbing layer (150) comprises p-type doped amorphous silicon.
17. The radiation imager of clause 10 wherein said light absorbing layer (150) comprises a material selected from the group consisting of p-type doped amorphous silicon, n-type doped amorphous silicon, substantially intrinsic silicon, silicon-rich silicon nitride, metal, and combinations thereof.
18. The radiation imager of clause 10 wherein said light absorbing layer (150) comprises a first layer (152) of silicon oxide, a second layer of silicon nitride (158), and a p-type doped amorphous silicon layer (156) disposed between said first layer (152) of silicon oxide and said second layer (158) of silicon nitride.
19. The radiation imager of clause 10 wherein said scintillator (180) comprises cesium iodide.
20. A method for fabricating a radiation imager, the method comprising:
   providing a light sensitive imaging array (120) having a plurality of light sensitive imaging regions (130) and a plurality of switching devices (140); and
   forming a light absorbing layer (150) substantially over at least one of the plurality of light sensitive imaging regions (130) and the plurality of switching devices (140), the light absorbing layer (150) operable to reduce the amount of light incident on the at least one of the plurality of light sensitive imaging regions (130) and the plurality of switching devices (140) from a scintillator (180) disposable over the light absorbing imaging array (120).
21. The method of clause 20 wherein the forming the light absorbing layer (150) comprises forming the light absorbing layer (150) substantially over the plurality of light sensitive imaging regions (130).
22. The method of clause 20 wherein the forming the absorbing layer (150) comprises forming the light absorbing layer (150) substantially over the plurality of switching devices (140).
23. The method of clause 20 wherein the forming the light absorbing layer (150) comprises forming a continuous light absorbing layer extending over said plurality of layer sensitive imaging regions and said plurality of switching devices.
24. The method of clause 20 wherein the light absorbing layer (150) primarily absorbs a portion of the spectrum of the light from the scintillator (180).
25. The method of clause 24 wherein the light absorbing layer (150) primarily absorbs light having a wavelength less than about 600 nm.
26. The method of clause 24 wherein the light absorbing layer (150) comprises p-type doped amorphous silicon.
27. The method of clause 20 wherein the forming the light absorbing layer (150) comprises forming the light absorbing layer (150) comprising a material selected from the group consisting of p-type doped amorphous silicon, n-type doped amorphous silicon, substantially intrinsic silicon, silicon-rich silicon nitride, metal, and combinations thereof.
28. The method of clause 20 wherein the forming the light absorbing layer (150) comprises forming a first layer (152) of silicon oxide, forming a second layer (158) of silicon nitride, and forming a p-type doped amorphous silicon layer (156) between the first layer (152) of silicon oxide and the second layer (158) of silicon nitride.
29. The method of clause 28 wherein the forming the first layer (152) comprises vapor depositing the first layer, the forming the second layer (158) comprises vapor depositing the second layer, and the forming the p-type doped amorphous silicon layer (156) comprises vapor depositing the p-type doped amorphous silicon layer.
30. A method for fabricating a radiation imager, the method comprising:
   providing a light sensitive imaging array (120) having a plurality of light sensitive imaging regions (130) and a plurality of switching devices (140); and
   forming a light absorbing layer (150) substantially over at least one of the plurality of light sensitive imaging regions (130) and the plurality of switching devices (140), the light absorbing layer (150) operable to reduce the amount of light incident on the at least one of the light sensitive imaging regions (130) and the plurality of switching devices (140) from the scintillator (180); and
   providing a scintillator (180) over the light absorbing layer. (150).
31. The method of clause 30 wherein the forming the light absorbing layer (150) comprises forming the light absorbing layer (150) substantially over said plurality of light sensitive imaging regions (130).
32. The method of clause 30 wherein the forming the light absorbing layer (150) comprises forming the light absorbing layer (150) substantially over said plurality of switching devices (140).
33. The method of clause 30 wherein said forming a light absorbing layer (150) comprises forming a continuous light absorbing layer.
34. The method of clause 30 wherein a first portion of the light emission spectrum from the scintillator (180) decreases over time, and wherein the light absorbing layer (150) primarily absorbs the first portion of the spectrum of the light emitted from the scintillator (180).
35. The method of clause 34 wherein the light absorbing layer (150) primarily absorbs light having a wavelength less than about 600 nm.
36. The method of clause 34 wherein the forming the light absorbing layer (150) comprises forming the light absorbing layer comprising p-type doped amorphous silicon.
37. The method of clause 30 wherein the forming the light absorbing layer (150) comprises forming the light absorbing layer comprising a material selected from the group consisting of p-type doped amorphous silicon, n-type doped amorphous silicon, substantially intrinsic silicon, silicon-rich silicon nitride, metal, and combinations thereof.
38. The method of clause 30 wherein the forming the light absorbing layer (150) comprises forming a first layer (152) of silicon oxide, forming a second layer (158) of silicon nitride, and forming a p-type doped amorphous silicon layer (156) between the first layer (152) of silicon oxide and the second layer (158) of silicon nitride.
39. The method of clause 38 wherein the forming the first layer (152) comprises vapor depositing the first layer, the forming the second layer (158) comprises vapor depositing the second layer, and the forming the p-type doped amorphous silicon layer (156) comprises vapor depositing the p-type doped amorphous silicon layer.
40. The method of clause 30 wherein the scintillator (180) comprises cesium iodide.

## Claims

1. A radiation imager comprising:
a light sensitive imaging array (120) having a plurality of light sensitive imaging regions (130) and a plurality of switching devices (140);
a light absorbing layer (150) disposed substantially over at least one of said plurality of light sensitive imaging regions (130) and said plurality of switching devices (140); and
wherein said light absorbing layer (150) reduces the amount of light incident on said at least one of said plurality of light sensitive imaging regions (130) and said plurality of switching devices (140) from a scintillator (180) disposable over said light absorbing imaging array (120).

2. The radiation imager of claim 1 wherein said light absorbing layer (150) is disposed substantially over said plurality of light sensitive imaging regions (130).

3. The radiation imager of claim 1 or 2, wherein said light absorbing layer (150) is disposed substantially over said plurality of switching devices (140).

4. A radiation imager comprising:
a light sensitive imaging array (120) having a plurality of light sensitive imaging regions (130) and a plurality of switching devices (140);
a scintillator (180);
a light absorbing layer (150) disposed between said scintillator (180) and said light sensitive imaging array (120) and substantially over at least one of said plurality of light sensitive imaging regions (130) and said plurality of switching devices (140); and
wherein said light absorbing layer (150) reduces the amount of light incident on said at least one of said plurality of light sensitive imaging regions (130) and said plurality of switching devices (140) from said scintillator (180).

5. The radiation imager of claim 4 wherein said light absorbing layer (150) is disposed substantially over said plurality of light sensitive imaging regions (130).

6. The radiation imager of claim 4 or 5 wherein said light absorbing layer (150) is disposed substantially over said plurality of switching devices (140).

7. A method for fabricating a radiation imager, the method comprising:
providing a light sensitive imaging array (120) having a plurality of light sensitive imaging regions (130) and a plurality of switching devices (140); and
forming a light absorbing layer (150) substantially over at least one of the plurality of light sensitive imaging regions (130) and the plurality of switching devices (140), the light absorbing layer (150) operable to reduce the amount of light incident on the at least one of the plurality of light sensitive imaging regions (130) and the plurality of switching devices (140) from a scintillator (180) disposable over the light absorbing imaging array (120).

8. The method of claim 7 wherein the forming the light absorbing layer (150) comprises forming the light absorbing layer (150) substantially over the plurality of light sensitive imaging regions (130).

9. A method for fabricating a radiation imager, the method comprising:
providing a light sensitive imaging array (120) having a plurality of light sensitive imaging regions (130) and a plurality of switching devices (140); and
forming a light absorbing layer (150) substantially over at least one of the plurality of light sensitive imaging regions (130) and the plurality of switching devices (140), the light absorbing layer (150) operable to reduce the amount of light incident on the at least one of the light sensitive imaging regions (130) and the plurality of switching devices (140) from the scintillator (180); and
providing a scintillator (180) over the light absorbing layer. (150).

10. The method of claim 9, wherein the forming the light absorbing layer (150) comprises forming the light absorbing layer (150) substantially over said plurality of light sensitive imaging regions (130).
